# EUROPÄISCHE PATENTSCHRIFT

(11) **EP 3 424 024 B1**
(45) Veröffentlichungstag und Bekanntmachung des Hinweises auf die Patenterteilung: **18.03.2026**
(21) Anmeldenummer: 17705142.2
(22) Anmeldetag: 15.02.2017
(51) Int. Cl.: G07D 7/01, G07D 7/004, G07D 7/00, B42D 25/387, B42D 25/382, B42D 25/373, B42D 25/369, B42D 25/36, B42D 25/328, B42D 25/313, B42D 25/309, B42D 25/305, B42D 25/324

(54) **SICHERHEITSDOKUMENT UND VERFAHREN ZU DESSEN AUTHENTIFIZIERUNG**
SECURITY DOCUMENT AND METHOD FOR THE AUTHENTICATION THEREOF
DOCUMENT DE SÉCURITE ET PROCÉDÉ PERMETTANT D'AUTHENTIFIER CE DOCUMENT

(30) Priorität: 02.03.2016 DE 102016103694; 20.07.2016 DE 102016113335
(43) Veröffentlichungstag der Anmeldung: 09.01.2019
(73) Patentinhaber: OVD Kinegram AG, 6300 Zug (CH)
(72) Erfinder: PETERS, John Anthony, 8804 Au - Zürich (CH); HANSEN, Achim, 6300 Zug (CH); SCHÄDLER, René, 6340 Baar (CH)
(74) Vertreter: Louis Pöhlau Lohrentz
(86) Internationale Anmeldenummer: PCT/EP2017/053421
(87) Internationale Veröffentlichungsnummer: WO 2017/148704

(56) Entgegenhaltungen:
- EP-A1- 1 139 302
- EP-A1- 2 743 893
- WO-A1-2012/035306
- WO-A1-2015/082332
- JP-A- 2015 055 909
- US-A1- 2008 149 713
- US-A1- 2011 283 369

## Beschreibung

Die Erfindung betrifft ein Sicherheitsdokument und ein Verfahren zu dessen Authentifizierung.

Zur Authentifizierung von Sicherheitsdokumenten, wie beispielsweise Ausweisdokumenten, Reisepässen, Visa und dergleichen werden in der Regel physikalische Merkmale verwendet. Dabei kann es sich beispielsweise um Sicherheitsdrucke und/oder auf das Sicherheitsdokument und/oder in das Sicherheitsdokument eingebrachte optisch variable Sicherheitselemente, wie beispielsweise Hologramme handeln.

Ein Problem hierbei ist es, dass einer Person, die ein solches Dokument überprüft, bekannt sein muss, wie ein solches Sicherheitselement im originalen Zustand aussieht und wie es sich beispielsweise bei der Betrachtung aus unterschiedlichen Winkeln verhält. Aufgrund der hohen Zahl unterschiedlicher Sicherheitsdokumente kann dieses Wissen jedoch nicht immer vorausgesetzt werden, so dass die Gefahr besteht, dass gefälschte Dokumente versehentlich als echt bewertet werden.

Es zeichnet sich ferner ab, dass zunehmend digitale Informationen zur Sicherung und Verifikation solcher Dokumente verwendet werden. Diese können maschinell verifiziert werden, so dass das oben genannte Problem nicht auftritt. Allerdings ist dabei in der Regel ein Abgleich mit einer Datenbank notwendig, so dass derartige Methoden nur dann Verwendung finden können, wenn eine entsprechende Infrastruktur zur Verfügung steht.

Daher müssen auch Dokumente mit digitaler Information diese Information noch in visueller Form enthalten, so dass beispielsweise bei einem Netzwerkausfall noch immer eine Authentifizierung möglich ist. Dies eröffnet jedoch wiederum Spielraum für Manipulationen am Dokument, da hier nicht sichergestellt werden kann, dass die digitale Information und die visuelle Information übereinstimmen.

Das Dokument WO 2012/035306 A1 betrifft ein System und ein Verfahren zum Enkodieren und kontrollierten Authentifikation von Sicherheitsdokumenten.

Das Dokument US 2008/0149713 A1 betrifft die Bestimmung von Medienbereichen, die wahrscheinlich Wasserzeichen aufweisen.

Das Dokument US 2011/0283369 A1 betrifft die Herstellung von Sicherheitsdokumenten und Verfahren zur Authentifikation von Sicherheitsdokumenten.

Das Dokument WO 2015/082332 A1 betrifft Verfahren zum Authentifizieren eines Sicherheitselements und optisch variables Sicherheitselement.

Das Dokument JP 2015055909 A betrifft ein Identifikationsverfahren und eine Identifikationsvorrichtung.

Aufgabe der vorliegenden Erfindung ist es, ein Sicherheitsdokument und ein Verfahren zu dessen Authentifizierung bereitzustellen, welche die zuverlässige Integration digitaler und physikalischer Sicherheitsmerkmale ermöglichen.

Diese Aufgabe wird durch den Gegenstand des Anspruchs 1 und den Gegenstand des Anspruchs 8 gelöst.

Ein derartiges Sicherheitsdokument umfasst ein erstes Sicherheitselement, welches wenigstens eine visuell erkennbare und insbesondere maschinenlesbare erste Information umfasst, und ein zweites Sicherheitselement, welches wenigstens eine insbesondere maschinenlesbare zweite Information umfasst, welche zur Verifikation der ersten Information verwendbar ist.

Zum Authentifizieren eines solchen Sicherheitsdokuments eignet sich ein Verfahren mit den Schritten:
- Auslesen einer visuell erkennbaren und insbesondere maschinenlesbaren ersten Information aus einem ersten Sicherheitselement;
- Auslesen einer insbesondere maschinenlesbaren zweiten Information aus einem zweiten Sicherheitselement;
- Verifizieren der ersten Information anhand der zweiten Information.

Unter einer visuell erkennbaren Information wird dabei eine Information verstanden, die mit dem bloßen Auge sichtbar ist und ohne weitere Hilfsmittel von einem menschlichen Betrachter interpretiert werden kann. Eine maschinenlesbare Information ist eine Information, die auf digitale Weise ausgelesen werden kann, entweder direkt aus einem Speichermedium oder unter Verwendung von Bild- und/oder Schrifterkennungssoftware. Eine Information im Sinne dieser Anmeldung kann dabei auch ein komplexerer Datensatz sein, es kann sich jedoch auch lediglich um einen Teil eines umfassenderen Datensatzes handeln

Durch die Verwendung der zweiten Information zur Verifizierung der ersten Information kann hierbei sichergestellt werden, dass Manipulationen an der ersten Information auch ohne eine Netzwerkverbindung erkannt werden können. Um ein solches Sicherheitsdokument zu fälschen, müsste ein Fälscher sowohl die erste als auch die zweite Information manipulieren. Da die zweite Information vorzugsweise digital vorliegt, kann durch geeignete Verschlüsselung eine besonders hohe Fälschungssicherheit geschaffen werden.

Es ist dabei bevorzugt, wenn die erste Information personalisierte Daten betreffend einen Inhaber des Sicherheitsdokuments und/oder ein mit dem Sicherheitsdokument assoziiertes Objekt umfasst.

Dabei kann es sich beispielsweise um den Namen eines Ausweisinhabers, um biometrische Daten, Passfotos, Ausstellungs- und Gültigkeitsdaten, Nationalität, eine Fahrgestellnummer oder Typenbezeichnung eines mit dem Sicherheitsdokument assoziierten Kraftwagens oder dergleichen handeln.

Ferner ist es zweckmäßig, wenn das erste Sicherheitselement eine insbesondere lasergravierte Inschrift und/oder eine Fotographie und/oder eine maschinenlesbare Zone (Machine Readable Zone MRZ) eines Ausweisdokuments und/oder eine Speichervorrichtung, insbesondere einen RFID-Chip umfasst.

Bevorzugt sind diese Elemente direkt visuell auslesbar, oder, im Falle eines RFID-Chips, durch Zugriff mittels Auslesegerät, insbesondere mittels eines Handgeräts lesbar. Unter einer maschinenlesbaren Zone wird dabei ein Bereich des Dokuments verstanden, der dem ICAO-Dokument 9303, Teil 3 folgt.

Es ist dabei vorteilhaft, wenn das zweite Sicherheitselement als Code, insbesondere als ein- oder zweidimensionaler Barcode, insbesondere als DataMatrix-Code, QR-Code, Aztec-Code, UPC (Universal Product Code), Code128, Code39 oder PDF417-Code ausgebildet ist. Solche Codes können bevorzugt als diffraktiver Code ausgebildet sein. Weitere Codierungsmöglichkeiten für das zweite Sicherheitselement sind beispielsweise Flächenmuster, Punktmuster, insbesondere Pixelmuster, Zahlencodes, spezielle, proprietäre Barcodes wie z.B. farbige Barcodes oder dreidimensionale Barcodes, Codes, welche in Speichermedien eingeschrieben sind wie z.B. in Volumenhologramme. Zum Einsatz können alternativ oder zusätzlich Codes auf Basis von magnetischen Speichermedien (Magnetstreifen, magnetische Tinten) sowie Codes aufgebracht durch fluoreszierende Tinten (zum Beispiel UV-fluoreszierende Tinten), IR-Upconverter, polarisierende optische Elemente. Zum optischen oder elektronischen Auslesen werden ggf. zusätzliche Verfahren benötigt wie UV-Beleuchtung, elektronische Leseeinrichtungen für magnetische Kodierungen, optische Filter, die auf das Dokument aufgelegt werden oder die z.B. vor das Aufnahmeobjektiv gehalten werden (z.B. Polarisationsfilter, Moiré-Analysator).

Hierdurch kann auf kleinem Raum eine hohe Informationsdichte bereitgestellt werden. Insbesondere bei einem diffraktiven Barcode liegt gleichzeitig ein optischer Sicherheitseffekt vor, der eine Fälschung zusätzlich erschwert. Der diffraktive optische Effekt bei einem diffraktiven Barcode kann dabei auch die eigentliche Codierung bereitstellen oder eine zusätzliche codierte Information bilden oder einen lediglich dekorativen optischen Effekt bereitstellen, der keine codierte Information enthält. Der dekorative Effekt kann auch mit einer codierten Information kombiniert sein.

Der QR-Code in ISO/IEC 18004 definiert und kann aus 21x21 bis 177x177 Modulen in einer zweidimensionalen Matrix bestehen. In dieser Matrix lassen sich alphanumerische Daten oder auch 8-Bit-Byte-Daten verschlüsseln. Beispielsweise lassen sich bis zu 7089 numerische Zeichen, bis zu 4296 alphanumerische Zeichen oder bis zu 2953 8-Bit-Byte-Zeichen verschlüsseln, jeweils in der maximalen Matrixgröße von 177x177 Modulen. Es ist auch möglich, entsprechend weniger Daten abzulegen und die Daten in der Matrix mit Fehlerkorrekturdaten zu kombinieren. Der Micro-QR-Code mit einer Größe zwischen 11x11 und 17x17 Modulen nimmt bis zu 35 Zeichen auf, bei einer Randbreite von mindestens zwei Modulen.

Die zweite Information kann beispielsweise auch in Form von OCR-Text vorliegen, der maschinenlesbar ist. Beispielsweise kann ein Sicherheitsdokument einen OCR-B-Text als zweite Information enthalten, wie in der ICAO Doc 9303 für eine maschinenlesbare Zone für Type 3 Reisedokumente definiert ist und in zwei Zeilen 44 Zeichen enthalten.

Besonders vorteilhaft ist es, wenn die zweite Information einen Schlüssel oder einen Teil eines Schlüssels zum Dekodieren der ersten Information umfasst.

Durch ein derartiges Verschlüsselungsverfahren wird eine besonders hohe Fälschungssicherheit erzielt. Beispielsweise kann es sich bei der zweiten Information um den öffentlichen Schlüssel eines asymmetrischen Schlüsselpaares handeln, der als digitale Signatur für einen mit dem privaten Schlüssel des Schlüsselpaares codierten Teil der ersten Information dient. Eine Manipulation der ersten Information ist dann ohne Kenntnis des privaten Schlüssels nicht möglich. Besonders geeignet ist beispielsweise die Elliptische-Kurven-Kryptografie (Elliptic Curve Digital Signature Algorithm (ECDSA)) und/oder zum Beispiel SHA-256 Hash-Algorithmen.

Es ist weiter zweckmäßig, wenn die zweite Information eine Prüfsumme für die erste Information oder Teile der ersten Information umfasst.

Durch eine solche Prüfsumme wird sichergestellt, dass Manipulationen an der ersten Information sofort erkannt werden können. Beispielsweise kann eine Prüfsumme mehrere Prüfziffern umfassen, die jeweils aus einzelnen biographischen Datenelementen des Sicherheitsdokuments, wie beispielsweise Name, Geburtsdatum etc., erzeugt werden. Das ICAO-Dokument 9303 sowie der äquivalente ISO-Standards 7501, Teil 1-3 beschreiben ein Beispiel für eine standardisierte Formel zur Berechnung solcher Prüfziffern. Es können jedoch auch nicht-standardisierte und ggf. geheime Verfahren angewendet werden.

Ferner ist es vorteilhaft, wenn die zweite Information eine redundante Wiedergabe zumindest eines Teils der ersten Information umfasst. Auch hierdurch kann eine Manipulation der ersten Information sofort erkannt werden, da dies zu Inkonsistenzen mit der zweiten Information führen würde.

In einer weiteren Ausführungsform kann die zweite Information ein Passwort für einen Datenbankzugriff und/oder für einen Zugriff auf einen RFID-Chip umfassen. Damit ist eine zusätzliche externe Prüfung des Dokuments auf seine Authentizität möglich.

Bevorzugt umfasst die erste und/oder zweite Information biometrische Merkmale, wie beispielsweise Fingerabdrücke, Portraitfotos, Irisscan, Retinascan, Handvenenscan.

Vorzugsweise können die biometrische Merkmale als Template vorliegen und/oder in einem Template gespeichert sein. Bei einem Template handelt es sich vorzugsweise um eine komprimierte und/oder in ihrem Informationsgehalt auf die wesentlichen biometrischen Merkmale reduzierte Datenmenge, die durch Anwenden von Algorithmen auf die biometrischen Rohdaten (beispielsweise Fingerabdruck, Portraitfoto, Irisscan, Retinascan, Handvenenscan) erzeugt wird.

Die Datenmenge eines Templates ist vorzugsweise zwischen 100 Byte und 500 Byte groß, z.B. 256 Byte groß und entspricht vorzugsweise dem ISO-Standard für derartige Templates.

Aufgrund der kleinen Datenmenge kann ein solches Template in einem nichtelektronischen Speicher, insbesondere in einem optisch auslesbaren Code wie beispielsweise einem Barcode, gespeichert und/oder abgelegt werden.

Es ist ferner bevorzugt, wenn die zweite Information eine Information über einen Sollzustand eines Sicherheitsmerkmals des ersten Sicherheitselements umfasst.

Insbesondere kann so einer Person, die das Dokument überprüft, angezeigt werden, wie ein authentisches Sicherheitsmerkmal auszusehen hat, so dass eine versehentliche visuelle Authentifizierung eines gefälschten Dokuments vermieden wird.

Es ist dabei erfindungsgemäß, dass das zweite Sicherheitselement wenigstens ein optisch variables Element aufweist, das ein oder mehrere der folgenden Strukturen umfasst: eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur, ein Volumenhologramm oder eine Dünnfilmstruktur mit Farbwechseleffekt umfasst. Hierdurch lassen sich vielfältige ansprechende optische Effekte erzielen und die Fälschungssicherheit weiter erhöhen.

Derartige optisch variable Elemente bzw. Strukturen sind nur schwer zu reproduzieren und bieten daher eine besonders gute Fälschungssicherheit. Das optisch variable Element bzw. die Strukturen stellen dabei somit insbesondere ein Sicherheitsmerkmal dar. Das optisch variable Element kann aber auch die erste und/oder zweite Information ausbilden und/oder enthalten, insbesondere in optisch auslesbarer Form enthalten, beispielsweise als diffraktiven Barcode enthalten.

Ein solches optisch variables Element überlappt die erste und/oder zweite Information zumindest bereichsweise, so dass eine Manipulation dieser Informationen nicht ohne Zerstörung des optisch variablen Elements bzw. des Sicherheitsmerkmals möglich ist.

Das optisch variable Element ist auch benachbart, insbesondere unmittelbar benachbart zu der ersten und/oder zu der zweiten Information angeordnet.

Das optisch variable Element kann bevorzugt wenigstens die erste Information wenigstens bereichsweise überlappen und an die zweite Information angrenzen, bevorzugt unmittelbar angrenzen. Auch der genau umgekehrte Fall ist möglich. Nämlich, dass das optisch variable Element wenigstens die zweite Information bereichsweise überlappt und an die erste Information angrenzt, bevorzugt unmittelbar angrenzt.

Weiter ist es bevorzugt, wenn das erste und/oder das zweite Sicherheitselement eine Reflexionsschicht, insbesondere eine vollflächige oder partielle Metallschicht und/oder eine vollflächige oder partielle Schicht aus einem hochbrechenden Material (HRI, High Refractive Index) umfasst. Die Reflexionsschicht liegt dabei bevorzugt im Bereich des optisch variablen Elements vor.

Es ist zudem zweckmäßig, wenn das erste und/oder das zweite Sicherheitselement bzw. das optisch variable Element ein- oder mehrschichtige gedruckte Strukturen, insbesondere umfassend farbige, optisch aktive und/oder optisch variable Farbstoffe und/oder Pigmente umfasst.

Insgesamt lassen sich so vielfältige Schichtaufbauten verwirklichen, die sowohl optisch ansprechenden als auch besonders fälschungssicher sind.

Vorteilhaft ist es, wenn das erste und das zweite Sicherheitselement benachbart, insbesondere unmittelbar benachbart zueinander angeordnet sind.

Das erste und das zweite Sicherheitselement liegen vorzugsweise als ein kombiniertes Sicherheitselement vor und/oder liegen als ein gemeinsames Patch vor. Sie bilden somit bevorzugt insgesamt eine Einheit und/oder werden von Teilbereichen eines gemeinsamen Schichtkörpers, insbesondere in Form eines Patches, einer Transferfolie, einer Laminierfolie oder eines Sicherheitsfadens gebildet.

Durch die benachbarte Ausgestaltung der Sicherheitselemente bzw. die sich daraus bevorzugt ergebene Einheit ist es möglich die Sicherheitselemente bzw. das daraus erhaltende kombinierte Sicherheitselement in nur einem einzigen Schritt auf ein Substrat zu applizieren.

Um das Applizieren der Sicherheitselemente zu vereinfachen, ist es von Vorteil, wenn das erste und das zweite Sicherheitselemente in einer gemeinsamen Transferlage einer Transferfolie oder in einer Laminierfolie bereitgestellt werden.

Es ist aber grundsätzlich auch möglich, dass das erste und das zweite Sicherheitselement wenigstens bereichsweise zueinander überlappend im Sicherheitsdokument angeordnet sein können. Dies ist erfindungsgemäß dahingehend zu verstehen, dass bei Draufsicht auf das Sicherheitsdokument ein Sicherheitselement das andere Sicherheitselement wenigstens teilweise über- bzw. bedeckt.

Das erste Sicherheitselement und/oder das zweite Sicherheitselement können jeweils zumindest zwei Teilbereiche aufweisen. **In** einem ersten Teilbereich ist dabei bevorzugt jeweils die erste bzw. zweite Information enthalten und/oder gespeichert. Benachbart zum ersten Teilbereich und/oder den ersten Teilbereich umgebend, insbesondere unmittelbar benachbart und/oder unmittelbar umgebend, kann ein zweiter Teilbereich vorgesehen sein. **In** dem zweiten Teilbereich sind bevorzugt weitere, insbesondere optische, besonders bevorzugt optisch variable Sicherheitsmerkmale bzw. Elemente vorgesehen.

Es ist vorteilhaft, wenn ein zweiter Teilbereich eines Sicherheitselements, aufweisend insbesondere ein optisch variables Element, wenigstens bereichsweise einen ersten Teilbereich des anderen Sicherheitselements überlappt und/oder abdeckt. Insbesondere überlappt der zweite Teilbereich des zweiten Sicherheitselements wenigstens bereichsweise das erste Sicherheitselement, besonders bevorzugt den ersten Teilbereich des ersten Sicherheitselements und damit bevorzugt die erste Information. Hierdurch wird erreicht, dass eine Manipulation der ersten Information nur durch Zerstörung des zweiten Teilbereichs, insbesondere des optischen Elements, möglich ist.

Unter benachbart ist vorzugsweise eine Beabstandung an Grenzlinien der Teilbereiche von weniger als 50 mm, weiter bevorzugt von weniger als 10 mm, weiter bevorzugt von weniger als 3 mm zu verstehen. Unter unmittelbar benachbart ist vorzugweise eine Beabstandung der Grenzlinien zweier Teilbereiche von weniger als 1 mm, weiter bevorzugt von weniger als 300 µm, weiter bevorzugt eine zumindest teilweise gebildete gemeinsame Grenzlinie zwischen den Teilbereichen zu verstehen.

Bevorzugt ist das Sicherheitsdokument dabei als Ausweisdokument, Visadokument, Führerschein, Kraftfahrzeugschein oder dergleichen ausgebildet.

Besonders zweckmäßig ist es, wenn das Auslesen der wenigstens einen ersten und/oder wenigstens einen zweiten Information und/oder das Verifizieren der ersten Information mittels eines Handgeräts, insbesondere eines Smartphones, PDAs, Tablets oder dergleichen durchgeführt wird. Das Auslesen der ersten und/oder zweiten Information und/oder das Verifizieren der ersten Information kann auch mit einem Auslesegerät erfolgen, welches an einem stationären Computer oder ähnlichem gekoppelt ist.

Bei dieser Ausführungsform wird somit keine spezielle Hardware benötigt, so dass die Authentifizierung des Dokuments problemlos mit handelsüblichen Handgeräten möglich ist.

Es ist vorteilhaft, wenn zum Auslesen der ersten und/oder zweiten Information ein Einzelbild und/oder eine Bildfolge und/oder ein Video des Sicherheitsdokuments erfasst wird.

Insbesondere bei der Aufnahme einer Bildfolge oder eines Videos ist es dabei möglich, auch das Vorliegen von optisch variablen Elementen bzw. optisch variablen Sicherheitsmerkmalen zu verifizieren, indem beispielsweise das Dokument aus unterschiedlichen Winkeln aufgenommen wird und die gewünschte optische Änderung des optisch variablen Elements bzw. des Sicherheitsmerkmals verifiziert wird.

Es ist insbesondere zweckmäßig, wenn vor dem oder bei dem Auslesen der ersten und/oder zweiten Information eine Anleitung zum Erfassen des Einzelbildes, der Bildfolge oder des Videos auf einem Display des Handgeräts angezeigt wird, welche insbesondere Vorgaben bzgl eines Aufnahmewinkels, eines Aufnahmeabstands oder dgl. umfasst.

Damit kann sichergestellt werden, dass der Benutzer eine gut auswertbare Aufnahme erzielt, so dass Fehler bei der Verifikation aufgrund von Aufnahmeartefakten vermieden werden können.

Zusätzlich kann die Anleitung auch Informationen enthalten, wie z.B. Beleuchtungseinheiten des Auslesegeräts (Blitz, eingebaute LEDs oder Verwendung des polarisierten Lichts des Geräte-Displays) zur Überprüfung einzusetzen sind.

Ferner ist es vorteilhaft, wenn zum Verifizieren der ersten Information eine Prüfsumme der ersten Information gebildet und mit einer von der zweiten Information umfassten Sollprüfsumme verglichen wird.

In einer weiteren bevorzugten Ausführungsform wird zum Verifizieren der ersten Information zumindest ein verschlüsselter Teil der ersten Information mittels eines von der zweiten Information umfassten Schlüssels entschlüsselt.

Ebenfalls ist es möglich, dass zum Verifizieren der ersten Information die erste Information oder Teile der ersten Information mit einer von der zweiten Information umfassten redundanten Kopie der ersten Information verglichen wird.

Wie bereits anhand des Sicherheitsdokuments oben erläutert, kann durch eine derartige Prüfsumme und/oder Verschlüsselung und/oder redundante Information eine Manipulation an der ersten Information unmittelbar erkannt werden.

Es ist ferner bevorzugt, wenn ein von der zweiten Information umfasstes Passwort als Zugangsauthentifizierung für ein Programm des Handgeräts und/oder eine auf dem Handgerät oder auf einer von dem Handgerät verschiedenen Rechenmaschine abgelegten Datenbank verwendet wird. Dies ermöglicht eine zusätzliche Sicherung des Dokuments. Selbst wenn es einem Fälscher gelingen sollte, die erste und zweite Information zu manipulieren, kann durch die dem Fälscher nicht zugängliche Datenbank eine weitere Sicherheitsebene eingeführt werden, anhand derer eine solche Manipulation erkannt werden kann, wenn die auf und/oder in dem Dokument gespeicherte Information mit den Informationen in der Datenbank verglichen wird.

Dabei ist es insbesondere vorteilhaft, wenn anhand der ersten und/oder zweiten Information eine dritte Information abgerufen wird. Diese dritte Information kann dabei aus einer auf dem Handgerät oder auf einer von dem Handgerät verschiedenen Rechenmaschine abgelegten Datenbank abgerufen werden. Bei der dritten Information kann es sich aber auch um eine Information handeln, die von dem Handgerät erfasst bzw. aufgezeichnet wird. Die Erfassung der Informationen erfolgt dabei bevorzugt in direktem Zusammenhang mit der ersten und/oder zweiten Information. Das bedeutet, dass die Erfassung der dritten Information zeitlich unmittelbar vor oder nach dem Auslesen der ersten und/oder zweiten Information erfolgt. Hierzu weist das Handgerät bevorzugt Mittel zur Aufzeichnung bzw. Erfassung auf. Kameras können hierfür vorteilhafterweise zum Einsatz kommen.

Diese dritte Information ermöglicht eine vom Dokument unabhängige Authentifizierung und ist einem potentiellen Fälscher nicht zugänglich.

Dabei ist es zweckmäßig, wenn die dritte Information einen Schlüssel oder einen Teil eines Schlüssels zum Dekodieren der ersten Information umfasst, oder zusammen mit der zweiten Information ein Schlüsselpaar bildet.

Alternativ oder zusätzlich kann die dritte Information eine Prüfsumme für die erste und/oder zweite Information umfasst.

Auch hier ist es möglich, dass die dritte Information eine redundante Wiedergabe zumindest eines Teils der ersten Information umfasst.

Wie bereits anhand des Sicherheitsdokuments oben erläutert, kann durch eine derartige Prüfsumme und/oder Verschlüsselung und/oder redundante Information eine Manipulation an der ersten Information unmittelbar erkannt werden.

Ferner kann die dritte Information auch ein Passwort für einen Datenbankzugriff und/oder für einen Zugriff auf einen RFID-Chip umfassen.

Hierdurch können weitere Sicherheitsebenen erzeugt werden, die sich, wie bereits beschrieben, dem Zugriff eines potentiellen Fälschers entziehen.

Es ist ferner zweckmäßig, wenn die dritte Information eine Information über einen Sollzustand eines Sicherheitsmerkmals des ersten und/oder zweiten Sicherheitselements umfasst.

Diese Information kann zur Unterstützung einer maschinellen Authentifizierung herangezogen werden, oder aber auch einem Benutzer zur Verfügung gestellt werden, um so die visuelle Authentifizierung auch bei Unkenntnis des Sollzustands des Dokuments zuverlässig zu ermöglichen.

Besonders bevorzugt ist es in diesem Fall, wenn anhand der dritten Information ein Einzelbild und/oder eine Bildfolge und/oder ein Video auf einem Display des Handgeräts angezeigt wird, welche einen Sollzustand eines insbesondere diffraktiven Sicherheitsmerkmals des ersten und/oder zweiten Sicherheitselements demonstrieren. Möglich sind auch Audiowiedergaben in Form von Anweisungen, wie eine Überprüfung durchzuführen ist oder auch welche Fragen der zu überprüfenden Person gestellt werden sollen. Diese Audiowiedergaben können auch "vorgespielt" werden, um z.B. zu prüfen, ob die überprüfte Person über Informationen im Kontext der auf dem Dokument aufgeführten Daten (Beispiel: In welchem Bundesland liegt ihr Geburtsort?) verfügt.

Dem Benutzer wird also angezeigt, wie die einzelnen Sicherheitsmerkmale des Dokuments im unmanipulierten Zustand erscheinen müssen, so dass er Fälschungen leicht und sicher erkennen kann.

Dabei ist es insbesondere vorteilhaft, wenn das Einzelbild und/oder die Bildfolge und/oder das Video eine Wiedergabe des Sicherheitsmerkmals aus unterschiedlichen Betrachtungs- und/oder Beleuchtungswinkeln umfasst.

Damit kann dem Benutzer demonstriert werden, wie sich beispielsweise ein optisch variables Sicherheitsmerkmal beim Kippen und/oder Drehen des Dokuments verhalten muss.

Das Handgerät kann auch mittels einer externen oder integrierten optischen Kamera einen Istzustand eines Sicherheitsmerkmals erfassen und auswerten. Dieser Istzustand kann dann mit einem zuvor abgespeicherten Sollzustand verglichen werden. Insbesondere ist es möglich, Farbanalysen, Schrifttypenanalysen, Helligkeitsanalysen, Kontrastanalysen und anderes an dem Sicherheitsmerkmal und/oder an der ersten Information durchzuführen.

Durch die Kamera kann auch eine biometrische Erkennung erfolgen, indem ein Istzustand der betreffenden Person erfasst wird und anschließend mit den Informationen auf dem Dokument, insbesondere mit der ersten Information, z.B. in Form eines Fotos, und/oder mit der zweiten Information, z.B. in Form von elektronisch abgelegten biometrischen Merkmalen, verglichen werden.

Während einer Überprüfung des Sicherheitsdokuments kann bevorzugt ein aktueller Scan der biometrischen Merkmale aufgenommen werden. Sind die biometrischen Merkmale in der ersten und/oder zweiten Information als Template gespeichert, dann ist es vorteilhaft, wenn der aufgenommene Scan in ein solches komprimiertes und/oder reduziertes, jedoch aktuelles Template umgewandelt wird und anschließend mit dem auf dem Sicherheitsdokument, insbesondere in der ersten und/oder zweiten Information, gespeicherten Template verglichen wird.

Es ist aber auch möglich, dass Bilder bzw. Fotos von den Benutzern in der ersten und/oder zweiten Information gespeichert sind. Um die Datenmenge möglichst niedrig zu halten, werden die Fotos bevorzugt mit einer niedrigen bzw. groben Auflösung gespeichert. Bei der Überprüfung des Sicherheitsdokuments ist es dann von Vorteil, dass das Auslesegerät, insbesondere das mobile Handgerät, die erste und/oder zweite Information ausliest und das Bild mit der niedrigen Auflösung neu generiert und insbesondere auf dem Auslesegerät, beispielsweise dem mobilen Handgerät oder einer daran angeschlossenen bzw. verbundenen Hardware angezeigt. Hierdurch kann das Bild von dem Prüfer gut ausgewertet werden. Das ausgelesene Bild kann dann entweder mit einem aktuell aufgenommenen Bild des Benutzers verglichen werden und/oder der Prüfer vergleicht das ausgelesene Bild direkt mit dem vor ihm stehenden Benutzer, nämlich unter Inaugenscheinnahme des Benutzers.

Bei der Überprüfung kann ein und dasselbe mobile Handgerät gleichzeitig das Template des Sicherheitsdokuments auslesen und ebenfalls den aktuellen Scan der biometrischen Merkmale durchführen. Dadurch kann die Überprüfung des Sicherheitsdokuments wesentlich erleichtert und beschleunigt werden.

Zudem könnte insbesondere in dem Handgerät eine Wahrscheinlichkeitsberechnung (Probability) errechnet und ausgegeben werden, mit welcher Wahrscheinlichkeit (z.B. 93%) es sich um ein echtes Dokument und/oder Sicherheitsmerkmal und/oder Information handelt. Dieses wäre anstelle einer Ja/Nein-Analyse z. B. bei der Überprüfung von sehr vielen Dokumenten in sehr kurzer Zeit eine praktikable Lösung.

Die erste Information und/oder die zweite Information können auf derselben Seite des Sicherheitsdokuments angeordnet sein oder auf unterschiedlichen Seiten und/oder an unterschiedlichen Positionen des Sicherheitsdokuments. Beispielsweise können bei einem kartenförmigen Sicherheitsdokument die erste und zweite Information auf der Vorderseite oder der Rückseite des Sicherheitsdokuments angeordnet sein. Eine der beiden Informationen kann aber auch auf der jeweils gegenüberliegenden Seite angeordnet sein. Bei einem buchartigen Sicherheitsdokument mit mehreren Einzelseiten können die erste und zweite Information gemeinsam auf derselben Seite einer Einzelseite angeordnet sein oder auf unterschiedlichen Einzelseiten. Beispielsweise kann die erste Information auf einer Einzelseite und die zweite Information auf einer anderen Einzelseite, insbesondere innerhalb eines dort angeordneten oder aufgebrachten Visums angeordnet sein.

Die erste Information und/oder die zweite Information können auch in einem transparenten Fensterbereich des Sicherheitsdokuments angeordnet sein. Es kann beispielsweise vorgesehen sein, dass die erste Information somit von vorn und/oder hinten und/oder in Transmission optisch erkennbar ist. Innerhalb des Fensters kann alternativ oder zusätzlich die zweite Information angeordnet sein.

Vorteilhafterweise kann das Sicherheitsdokument wenigstens einen Mikrocode aufweisen. Bei dem Mikrocode handelt es sich insbesondere um ein projektspezifisches Merkmal. Dies ist insbesondere dahingehend zu verstehen, dass Sicherheitsdokumente einer speziellen Art, beispielsweise Sicherheitsdokumente einer gewissen Art, wie Pässe, oder Sicherheitsdokumente derselben Behörde, den gleichen Mikrocode aufweisen.

Der Mikrocode ist bevorzugt so ausgebildet, dass er mit dem menschlichen Augen nicht aufgelöst werden kann, also nicht erkennbar ist. Der Mikrocode weist bevorzugt eine Strukturgröße zwischen 0,5 µm und 300 µm, bevorzugt zwischen 1 µm und 100 µm, insbesondere bevorzugt zwischen 1 µm und 50 µm. Der Mikrocode kann als QR-Code ausgebildet sein. Bevorzugt ist der Mikrocode aus einer sehr fein strukturierten Teilmetallisierung und/oder einer sehr fein strukturieren Farbschicht ausgebildet. Bevorzugt ist der Mikrocode von einem optisch variablen Element überdeckt. Das optisch variable Element kann dabei so ausgebildet sein, dass es den Mikrocode optisch überstrahlt oder anderweitig optisch verbirgt, um die Erkennbarkeit des Mikrocodes mit dem unbewaffneten menschlichen Auge zu erschweren.

Beim Überprüfen des Sicherheitsdokuments wird bevorzugt der Mikrocode mittels des Auslesegeräts ausgelesen. Das Lesegerät vergleicht hier bevorzugt den ausgelesenen Mikrocode mit anderen in dem Sicherheitsdokument gespeicherten Informationen, insbesondere mit der Dokumentenart des Sicherheitsdokuments und/oder dem Ausstellungsland des Sicherheitsdokuments. Insbesondere werden die auf dem Sicherheitsdokument gespeicherten, insbesondere personenbezogenen Daten erst dann angezeigt, wenn bestätigt ist, dass der Mikrocode mit den zu vergleichenden Daten auf dem Sicherheitsdokument, insbesondere mit der Dokumentenart und/oder dem Ausstellungsland, übereinstimmt bzw. mit diesen korrespondiert.

Es ist grundsätzlich auch möglich, dass der Mikrocode ferner in dem Chip des Sicherheitsdokuments gespeichert ist. Hierdurch kann sichergestellt werden, dass der richtige Chip auf dem Sicherheitsdokument angeordnet ist. Beim Auslesen des Sicherheitsdokuments wird der Mikrocode in dem Sicherheitsdokument mit dem Mikrocode im Chip verglichen.

Bevorzugt wird der Mikrocode in eine Folie, insbesondere eine Transferfolie, eingebracht, die noch keine individualisierenden Merkmale, wie beispielsweise personenbezogene Merkmale und/oder biometrische Merkmale, umfasst. Zur Herstellung der Mikrocodes eignen sich insbesondere bekannte Demetallisierungsverfahren und/oder Farbstrukturierungsverfahren zur Herstellung einer sehr fein strukturierten Teilmetallisierung und/oder einer sehr fein strukturieren Farbschicht. Hierdurch lässt sich eine sehr feine Strukturierung der Mikrocodes erreichen. Während der Individualisierung werden dann personenbezogene Daten in die Folie eingebracht. Dies geschieht insbesondere durch Lasergravur.

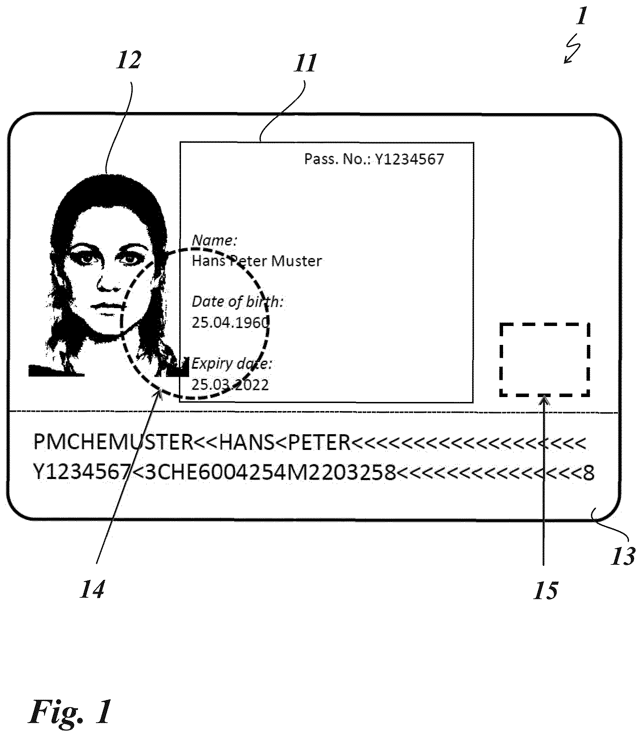

Die Erfindung wird nun anhand von Ausführungsbeispielen näher erläutert. Es zeigen
- Fig. 1: Eine schematische Darstellung eines Ausführungsbeispiels eines Sicherheitsdokuments;
- Fig. 2: Eine schematische Darstellung des Verfahrensablaufs bei der Verifikation eines Sicherheitsdokuments;
- Fig. 3: Eine schematische Darstellung des Verfahrensablaufs bei der Verifikation eines alternativen Sicherheitsdokuments;
- Fig. 4: Eine schematische Darstellung eines Ausführungsbeispiels eines Sicherheitsdokuments mit RFID-Chip;
- Fig. 5: Eine schematische Darstellung des Verfahrensablaufs bei der Verifikation eines Sicherheitsdokuments unter Einbeziehung einer externen Datenbank;
- Fig. 6: Eine schematische Darstellung eines alternativen Ausführungsbeispiels eines Sicherheitsdokuments mit RFID-Chip;
- Fig. 7: Eine schematische Darstellung des Verfahrensablaufs bei der Verifikation eines Sicherheitsdokuments nach Fig. 6 unter Einbeziehung einer externen Datenbank;
- Fig. 8: Eine schematische Darstellung eines weiteren Ausführungsbeispiels eines Sicherheitsdokuments.

Ein Sicherheitsdokument 1 in Form eines Personalausweises umfasst einen Bereich 11 mit lesbaren Ausweisdaten, ein Passbild 12, und eine standardisierte maschinenlesbare Zone 13. Der Bereich 11 und das Passbild 12 sind teilweise durch ein optisch variables Sicherheitselement 14 überlappt. Zusätzlich ist ein maschinenlesbares Sicherheitselement 15 vorgesehen.

Der Bereich 11 umfasst personalisierte Daten betreffend einen Inhaber des Sicherheitsdokuments. Dabei kann es sich beispielsweise um den Namen eines Ausweisinhabers, um biometrische Daten, Passfotos, Ausstellungs- und Gültigkeitsdaten, Nationalität, eine Fahrgestellnummer oder Typenbezeichnung eines mit dem Sicherheitsdokument assoziierten Kraftwagens oder dergleichen handeln.

Diese Daten sind ebenfalls in der maschinenlesbaren Zone 13 zumindest teilweise wiedergegeben. Unter einer maschinenlesbaren Zone 13 wird dabei ein Bereich des Dokuments verstanden, der dem ICAO-Dokument 9303, Teil 3 folgt.

Das maschinenlesbare Sicherheitselement 15 ist bevorzugt als Code, insbesondere als ein- oder zweidimensionaler Barcode, insbesondere als DataMatrix-Code, QR-Code, Aztec-Code, UPC (Universal Product Code), Code128, Code39 oder PDF417-Code ausgebildet ist. Solche Codes können bevorzugt als diffraktiver Code ausgebildet sein. Weitere Codierungsmöglichkeiten für das zweite Sicherheitselement sind beispielsweise Flächenmuster, Punktmuster, insbesondere Pixelmuster, Zahlencodes, spezielle, proprietäre Barcodes wie z.B. farbige Barcodes oder dreidimensionale Barcodes, Codes, welche in Speichermedien eingeschrieben sind wie z.B. in Volumenhologramme. Zum Einsatz können alternativ oder zusätzlich Codes auf Basis von magnetischen Speichermedien (Magnetstreifen, magnetische Tinten) sowie Codes aufgebracht durch fluoreszierende Tinten (zum Beispiel UV-fluoreszierende Tinten), IR-Upconverter, polarisierende optische Elemente. Zum optischen oder elektronischen Auslesen werden ggf. zusätzliche Verfahren benötigt wie UV-Beleuchtung, elektronische Leseeinrichtungen für magnetische Kodierungen, optische Filter, die auf das Dokument aufgelegt werden oder die z.B. vor das Aufnahmeobjektiv gehalten werden (z.B. Polarisationsfilter, Moiré-Analysator).

Hierdurch kann auf kleinem Raum eine hohe Informationsdichte bereitgestellt werden. Insbesondere bei einem diffraktiven Barcode liegt gleichzeitig ein optischer Sicherheitseffekt vor, der eine Fälschung zusätzlich erschwert. Der diffraktive optische Effekt bei einem diffraktiven Barcode kann dabei die eigentliche Codierung bereitstellen oder eine zusätzliche codierte Information bilden oder einen lediglich dekorativen optischen Effekt bereitstellen, der keine codierte Information enthält. Der dekorative Effekt kann auch mit einer codierten Information kombiniert sein.

Das Sicherheitselement 14 umfasst bevorzugt einzeln oder in Kombination eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur, ein Volumenhologramm oder eine Dünnfilmstruktur mit Farbwechseleffekt.

Weiter ist es bevorzugt, wenn das Sicherheitselement 14 eine Reflexionsschicht, insbesondere eine vollflächige oder partielle Metallschicht und/oder eine vollflächige oder partielle Schicht aus einem hochbrechenden Material (HRI, High Refractive Index) umfasst.

Es ist zudem zweckmäßig, wenn das Sicherheitselement 14 ein- oder mehrschichtige gedruckte Strukturen, insbesondere umfassend farbige, optisch aktive und/oder optisch variable Farbstoffe und/oder Pigmente umfasst.

Derartige Strukturen sind nur schwer zu reproduzieren und bieten daher eine besonders gute Fälschungssicherheit. Gleichzeitig lassen sich so vielfältige ansprechende optische Effekte erzielen. Da das Sicherheitselement 14 den Bereich 11 und das Passbild 12 zumindest bereichsweise überlappt, ist eine Manipulation dieser Elemente nicht ohne Zerstörung des Sicherheitsmerkmals 14 möglich.

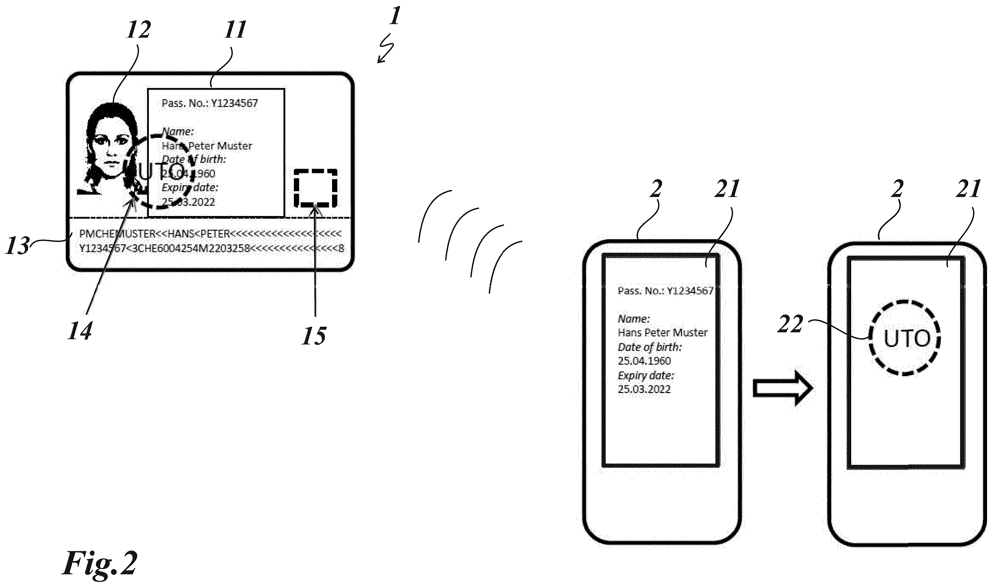

Wie Fig. 2 zeigt, kann das Dokument 1 zur Authentifizierung mit einem Handgerät 2, beispielsweise ein Smartphone, mit integrierter Kamera erfasst werden. Eine entsprechende Software des Handgeräts erfasst sowohl die Informationen aus den Bereichen 11, 12 und 13, als auch die maschinenlesbare Information des Sicherheitselements 15.

Die aus dem Sicherheitselement 15 ausgelesene Information kann dann auf einem Display 21 des Handgeräts angezeigt werden. Der Benutzer kann nun überprüfen, ob diese Information konsistent mit der gedruckten Information im Bereich 11 ist, oder ob dieser, oder auch das Passbild 12 oder die maschinenlesbare Zone 13 manipuliert wurden.

Ferner kann auf dem Display 21 auch eine Wiedergabe 22 des Sicherheitselements 14 angezeigt werden. Dies dient als Handreichung für den Benutzer, um diesen die Identifikation eines korrekten und nicht manipulierten Sicherheitselements 14 zu erleichtern. Zusätzlich können weitere Informationen wie beispielsweise das frühestmögliche Ausgabedatum des Dokuments (Datum des Inverkehrbringens) angezeigt werden.

Das Sicherheitselement 15 kann ferner noch weitere Informationen enthalten bzw. weitere Funktionen erfüllen. Besonders vorteilhaft ist es, wenn das Sicherheitselement 15 einen Schlüssel oder einen Teil eines Schlüssels zum Dekodieren einer in den Bereichen 11 oder 13 enthaltenen verschlüsselten Information umfasst.

Durch ein derartiges Verschlüsselungsverfahren wird eine besonders hohe Fälschungssicherheit erzielt. Beispielsweise kann es sich bei der im Sicherheitselement 15 enthaltenen Information um den öffentlichen Schlüssel eines asymmetrischen Schlüsselpaares handeln, der als digitale Signatur für einen mit dem privaten Schlüssel des Schlüsselpaares codierten Teil der Bereiche 11 oder 13 dient. Eine Manipulation dieser Bereiche ist dann ohne Kenntnis des privaten Schlüssels nicht möglich. Besonders geeignet ist beispielsweise die Elliptische-Kurven-Kryptografie (Elliptic Curve Digital Signature Algorithm (ECDSA))und/oder zum Beispiel SHA-256 Hash-Algorithmen.

Es ist ebenfalls möglich, dass das Sicherheitselement 15 eine Prüfsumme für eine in den Bereichen 11, 12 oder 13 enthaltene Information umfasst. Durch eine solche Prüfsumme wird sichergestellt, dass Manipulationen an diesen Bereichen sofort erkannt werden können. Beispielsweise kann eine Prüfsumme mehrere Prüfziffern umfassen, die jeweils aus einzelnen biographischen Datenelementen des Sicherheitsdokuments, wie beispielsweise Name, Geburtsdatum etc., erzeugt werden. Das ICAO-Dokument 9303 sowie der äquivalente ISO-Standards 7501, Teil 1-3 beschreiben ein Beispiel für eine standardisierte Formel zur Berechnung solcher Prüfziffern. Es können jedoch auch nicht-standardisierte und ggf. geheime Verfahren angewendet werden.

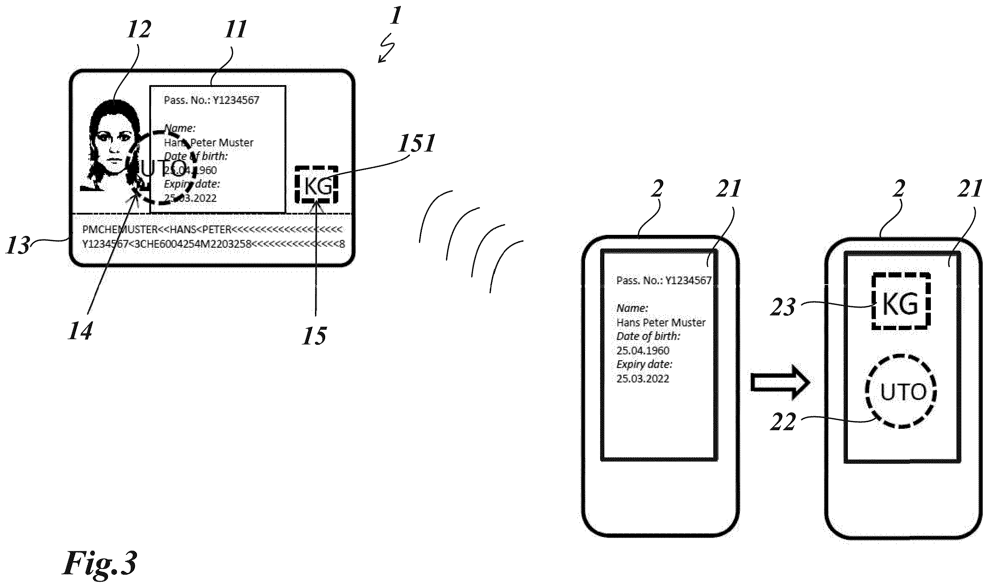

In der Ausführungsform nach Fig. 3 umfasst das Sicherheitselement 15 noch eine zusätzliche optisch variable Struktur 151. Diese kann bei der Verifizierung ebenfalls als Soll-Wiedergabe 23 auf dem Display 21 des Handgeräts angezeigt werden, was die Fälschungssicherheit des Dokuments 1 weiter erhöht.

Die optisch variable Struktur 151 umfasst ebenfalls bevorzugt einzeln oder in Kombination eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur, ein Volumenhologramm oder eine Dünnfilmstruktur mit Farbwechseleffekt.

Weiter ist es bevorzugt, wenn die optisch variable Struktur 151 eine Reflexionsschicht, insbesondere eine vollflächige oder partielle Metallschicht und/oder eine vollflächige oder partielle Schicht aus einem hochbrechenden Material (HRI, High Refractive Index) und/oder ein- oder mehrschichtige gedruckte Strukturen, insbesondere umfassend farbige, optisch aktive und/oder optisch variable Farbstoffe und/oder Pigmente umfasst.

Wie bereits geschildert, lassen sich so optisch ansprechende und besonders fälschungssichere Sicherheitselemente 15 erzeugen.

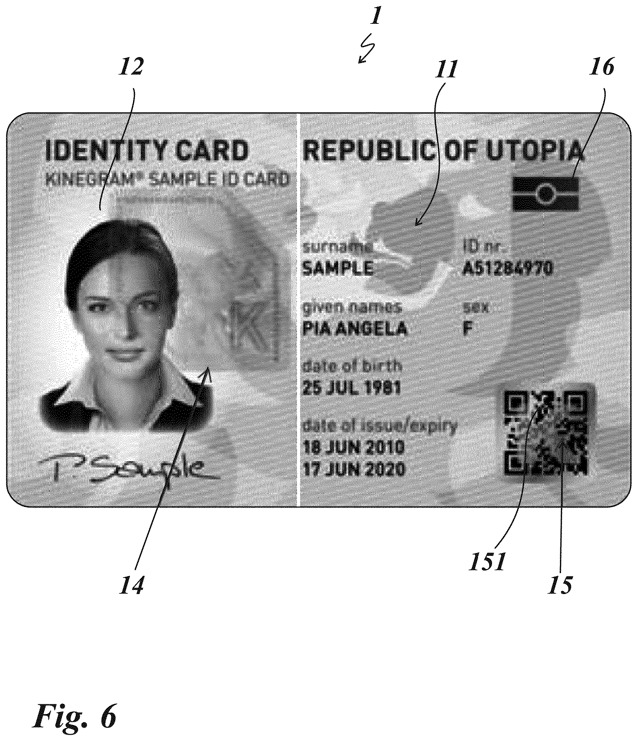

Eine detaillierte Ansicht eines solchen Dokuments 1 ist nochmals in Fig. 6 wiedergegeben.

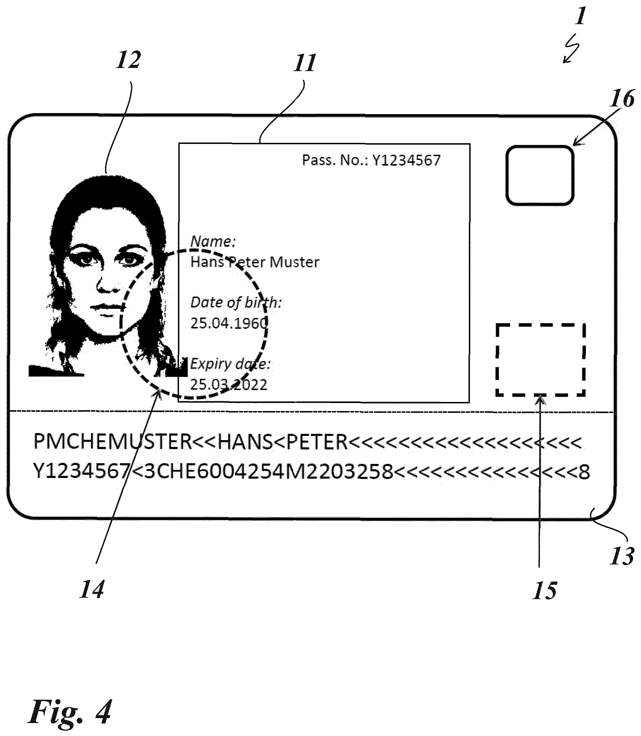

In der Ausführungsform des Sicherheitsdokuments 1 nach Fig. 4 ist auf dem Sicherheitsdokument 1 zusätzlich ein RFID-Chip 16 vorgesehen. In dem RFID-Chip 16 kann beispielsweise eine redundante Kopie der Informationen aus den Bereichen 11, 12, 13 abgelegt sein. Bevorzugt ist diese verschlüsselt, wobei eine in dem Sicherheitselement 15 vorliegende Information auf die bereits beschriebene Weise als Schlüssel für den Zugriff auf die Information des RFID-Chips dienen kann.

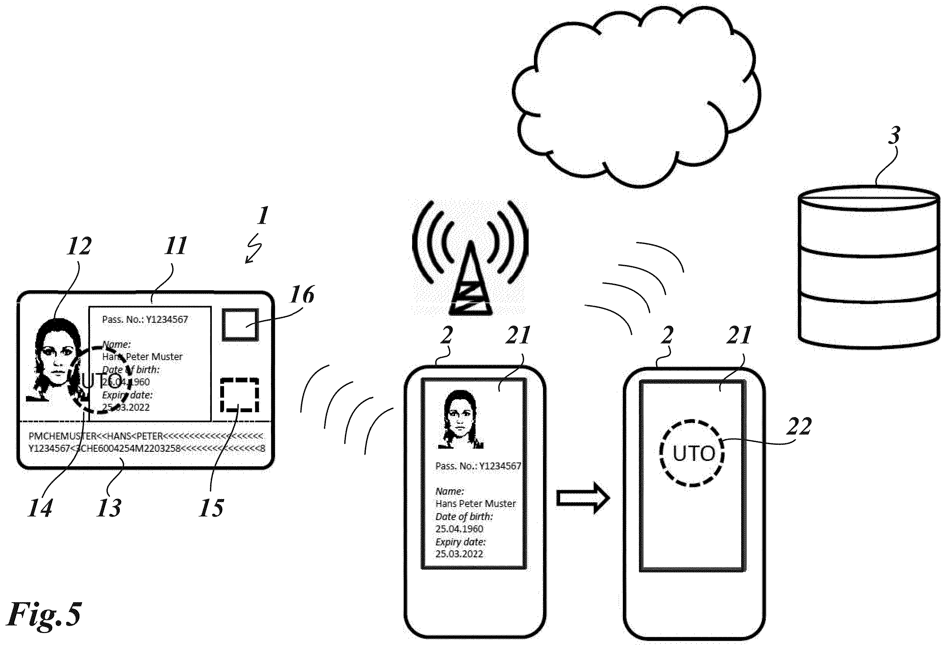

Zusätzlich kann, wie Fig. 5 zeigt, durch das Handgerät 2 eine Abfrage einer externen Datenbank 3 durchgeführt werden. Als Passwort oder Zugriffsschlüssel für die Datenbank 3 kann dabei eine im Sicherheitselement 15 oder im Chip 16 abgelegte Information dienen. Informationen aus den beiden Elementen können sich dabei auch ergänzen, um eine besonders hohe Sicherheit zu erzielen.

Die Datenbank 3 kann dabei wiederum eine Kopie der Daten aus den Bereichen 11, 12, 13 bereitstellen, auf die beschriebene Weise Wiedergaben 22 der Sicherheitselemente 14, 15 liefern oder auch weitere Schlüssel oder Prüfsummen zur Verifikation des Dokuments 1 bereitstellen.

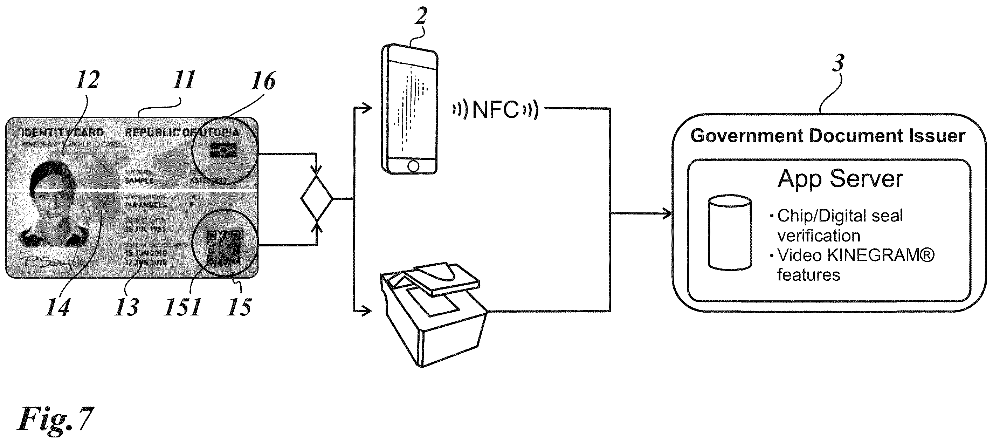

Der Verfahrensablauf hierfür ist in Fig. 7 nochmals veranschaulicht. Durch das Handgerät 2 werden die Informationen der Sicherheitselement 15 und 16 erfasst und gegebenenfalls entschlüsselt. Die im Chip 16 gespeicherten biographischen Informationen des Ausweisinhabers werden nun angezeigt und können mit den im Bereich 11 aufgebrachten Informationen verglichen werden. Gegebenenfalls kann auch ein elektronisch hinterlegtes Passbild angezeigt werden und mit dem Passbild 12 verglichen werden. Hierdurch können bereits Manipulationen in den Bereichen 11 und 12 erkannt werden.

Gleichzeitig kontaktiert das Handgerät die Datenbank 3 und lädt von dort ebenfalls eine Kopie der biographischen Daten des Ausweisinhabers herunter. Diese werden nun ebenfalls angezeigt und können ebenfalls mit den im Dokument 1 hinterlegten Daten verglichen werden. Damit ist es auch dann möglich, eine Fälschung zu erkennen, wenn sowohl die Bereiche 11 und 12 als auch das Sicherheitselement 15 und der Chip 16 manipuliert sind.

Das Handgerät bezieht ferner noch die bereits erläuterte Wiedergabe 22, 23 der Sicherheitselemente 14, 151 von der Datenbank 3 oder vom Speicher im Chip 16 in der Sicherheitsdokument 1 oder vom Speicher in einem Chip im Handgerät 2 und zeigt diese dem Benutzer an. Dabei kann eine Information des Sicherheitselements 15 als Zugangscode oder Passwort für die jeweilige Datenbank bzw. den jeweiligen Chip verwendet werden. Bevorzugt wird dabei das jeweilige Sicherheitselement in mehreren Betrachtungswinkeln dargestellt, um so die optisch variablen Effekte der Sicherheitselemente 14, 151 zu demonstrieren und deren Verifikation zu erleichtern.

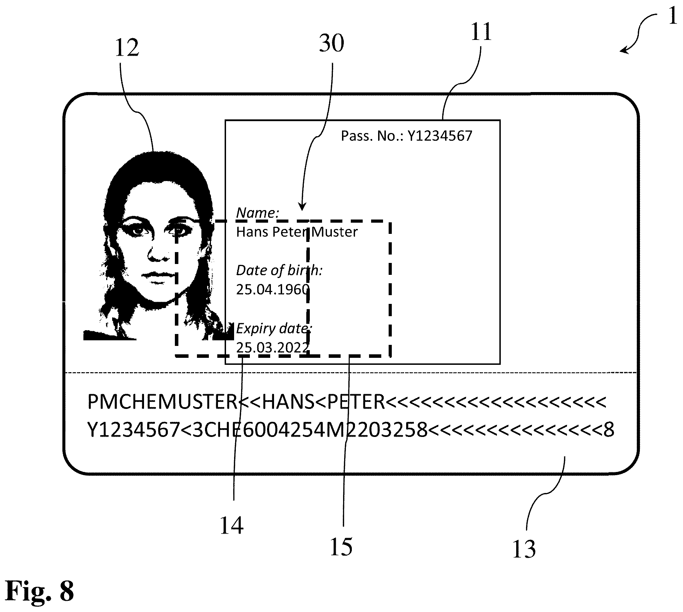

Figur 8 zeigt ein weiteres Ausführungsbeispiels eines Sicherheitsdokuments 1. Das maschinenlesbare Sicherheitselement 15, das bevorzugt einen maschinenlesbaren Code aufweist, grenzt unmittelbar an das Sicherheitselement 14, das bevorzugt ein optisch variables Element aufweist, an. Die Sicherheitselemente 14, 15 können erfindungsgemäß als ein kombiniertes Sicherheitselement 30 angesehen werden. Vorteilhaft ist es, wenn die Sicherheitselemente 14, 15 als ein gemeinsames Patch ausgebildet sind. Hierdurch lassen sich die Sicherheitselemente 14, 15 in einem einzigen Applikationsschritt auf ein Substrat des Sicherheitsdokuments 1 appliziert.

In Figur 8 überlappt das kombinierte Sicherheitselement 30 sowohl den Bereich 11 mit lesbaren Ausweisdaten und das Passbild 12. Dies hat den Vorteil, dass eine Manipulation des Bereichs 11 sowie des Passbildes 12 nur durch die Zerstörung des kombinierten Sicherheitselements 30 möglich ist. Denkbar ist allerdings auch, dass lediglich eines der Sicherheitselemente 14, 15 den Bereich 11 und/oder das Passbild 12 überlappt.

## Patentansprüche

1. Sicherheitsdokument (1) mit einem ersten Sicherheitselement (14), welches eine visuell erkennbare und maschinenlesbare erste Information umfasst, und einem zweiten Sicherheitselement (15), welches eine maschinenlesbare zweite Information umfasst, welche zur Verifikation der ersten Information verwendbar ist,
wobei das zweite Sicherheitselement ein optisch variables Element (151) umfasst, das eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur, ein Volumenhologramm oder eine Dünnfilmstruktur mit Farbwechseleffekt umfasst und
das optisch variable Element an die zweite Information und/oder eine weitere Information angrenzt, bevorzugt unmittelbar angrenzt, und die erste Information wenigstens bereichsweise überlappt, oder dass
das optisch variable Element an die erste Information angrenzt, bevorzugt unmittelbar angrenzt, und die zweite Information wenigstens bereichsweise überlappt.

2. Sicherheitsdokument nach Anspruch 1,
**dadurch gekennzeichnet,**
**dass** die erste Information personalisierte Daten betreffend einen Inhaber des Sicherheitsdokuments und/oder ein mit dem Sicherheitsdokument assoziiertes Objekt umfasst, und/oder dass das erste Sicherheitselement eine insbesondere gedruckte oder lasergravierte Inschrift und/oder eine Fotographie und/oder eine maschinenlesbare Zone (Machine Readable Zone MRZ) eines Ausweisdokuments und/oder eine Speichervorrichtung, insbesondere einen RFID-Chip umfasst.

3. Sicherheitsdokument nach einem der vorhergehenden Ansprüche,
**dadurch gekennzeichnet,**
**dass** das zweite Sicherheitselement als Code, insbesondere als ein- oder zweidimensionaler Barcode, bevorzugt als diffraktiver Barcode, ausgebildet ist, und/oder
**dass** die zweite Information einen Schlüssel oder einen Teil eines Schlüssels zum Dekodieren der ersten Information umfasst, und/oder
**dass** die zweite Information eine Prüfsumme für die erste Information umfasst, und/oder
**dass** die zweite Information eine redundante Wiedergabe zumindest eines Teils der ersten Information umfasst, und/oder
**dass** die zweite Information ein Passwort für einen Datenbankzugriff und/oder für einen Zugriff auf einen RFID-Chip umfasst.

4. Sicherheitsdokument nach einem der vorhergehenden Ansprüche,
**dadurch gekennzeichnet,**
**dass** das erste und/oder das zweite Sicherheitselement eine Reflexionsschicht, insbesondere eine vollflächige oder partielle Metallschicht und/oder eine vollflächige oder partielle Schicht aus einem hochbrechenden Material (HRI, High Refractive Index) umfasst, und/oder dass das erste und/oder das zweite Sicherheitselement ein- oder mehrschichtige gedruckte Strukturen, insbesondere umfassend farbige, optisch aktive und/oder optisch variable Farbstoffe und/oder Pigmente umfasst.

5. Sicherheitsdokument nach einem der vorhergehenden Ansprüche,
**dadurch gekennzeichnet,**
**dass** das erste Sicherheitselement und/oder das zweite Sicherheitselement jeweils zumindest zwei Teilbereiche aufweisen, wobei bevorzugt in einem ersten Teilbereich jeweils die erste bzw. zweite Information enthalten und/oder gespeichert ist und benachbart zum ersten Teilbereich und/oder den ersten Teilbereich umgebend ein zweiter Teilbereich, bevorzugt umfassend ein optisch variables Element, vorgesehen ist, insbesondere
**dass** wenigstens der zweite Teilbereich des ersten Sicherheitselements wenigstens bereichsweise das zweite Sicherheitselement, insbesondere den ersten Teilbereich des Sicherheitselement überlappt oder wenigstens der zweite Teilbereich des zweiten Sicherheitselements wenigstens bereichsweise das erste Sicherheitselement, insbesondere den ersten Teilbereich des Sicherheitselement überlappt.

6. Sicherheitsdokument nach einem der vorhergehenden Ansprüche,
**gekennzeichnet durch**,
wenigstens einen Mikrocode, der bevorzugt eine Strukturgröße zwischen 0,5 µm und 300 µm, insbesondere zwischen 1 µm und 100 µm, insbesondere bevorzugt zwischen 1 µm und 50 µm, umfasst.

7. Sicherheitsdokument nach einem der vorhergehenden Ansprüche,
**dadurch gekennzeichnet,**
**dass** das Sicherheitsdokument als Ausweisdokument, Visadokument, Führerschein, Kraftfahrzeugschein oder dergleichen ausgebildet ist.

8. Verfahren zum Authentifizieren eines Sicherheitsdokuments nach einem der vorhergehenden Ansprüche mittels eines Handgeräts mit den Schritten:
- Auslesen einer visuell erkennbaren und insbesondere maschinenlesbare erste Information aus einem ersten Sicherheitselement;
- Auslesen einer insbesondere maschinenlesbaren zweite Information aus einem zweiten Sicherheitselement;
- Verifizieren der ersten Information anhand der zweiten Information,
wobei zum Auslesen der ersten und/oder zweiten Information eine Bildfolge und/oder ein Video des Sicherheitsdokuments erfasst wird und wobei vor dem oder bei dem Auslesen der ersten und/oder zweiten Information eine Anleitung zum Erfassen der Bildfolge oder des Videos auf einem Display des Handgeräts angezeigt wird, welche insbesondere Vorgaben bzgl eines Aufnahmewinkels, eines Aufnahmeabstands oder dgl. umfasst,
wobei das Vorliegen eines optisch variablen Elementes oder eines optisch variablen Sicherheitsmerkmals verifiziert wird, indem das Dokument aus unterschiedlichen Winkeln aufgenommen wird und die gewünschte optische Änderung des optisch variablen Elements bzw. des Sicherheitsmerkmals verifiziert wird.

9. Verfahren nach Anspruch 8,
**dadurch gekennzeichnet,**
**dass** das Auslesen der ersten und/oder zweiten Information und/oder das Verifizieren der ersten Information mittels eines Handgeräts, insbesondere eines Smartphones, PDAs, Tablets oder dgl. durchgeführt wird.

10. Verfahren nach einem der Ansprüche 8 bis 9,
**dadurch gekennzeichnet,**
**dass** zum Verifizieren der ersten Information eine Prüfsumme der ersten Information gebildet und mit einer von der zweiten Information umfassten Sollprüfsumme verglichen wird, und/oder
**dass** zum Verifizieren der ersten Information zumindest ein verschlüsselter Teil der ersten Information mittels eines von der zweiten Information umfassten Schlüssels entschlüsselt wird, und/oder
**dass** zum Verifizieren der ersten Information die erste Information mit einer von der zweiten Information umfassten redundanten Kopie der ersten Information verglichen wird.

11. Verfahren nach einem der Ansprüche 8 bis 10,
**dadurch gekennzeichnet,**
**dass** anhand der ersten und/oder zweiten Information eine dritte Information aus einer auf dem Handgerät oder auf einer von dem Handgerät verschiedenen Rechenmaschine abgelegten Datenbank abgerufen wird oder eine dritte Information von dem Handgerät erfasst bzw. aufgezeichnet wird, insbesondere
**dass** die dritte Information einen Schlüssel oder einen Teil eines Schlüssels zum Dekodieren der ersten Information umfasst, oder zusammen mit der zweiten Information ein Schlüsselpaar bildet.

12. Verfahren nach Anspruch 11,
**dadurch gekennzeichnet,**
**dass** die dritte Information eine Information über einen Sollzustand eines Sicherheitsmerkmals des ersten und/oder zweiten Sicherheitselements umfasst, insbesondere
**dass** anhand der dritten Information ein Einzelbild und/oder eine Bildfolge und/oder ein Video auf einem Display des Handgeräts angezeigt wird, welche einen Sollzustand eines insbesondere diffraktiven Sicherheitsmerkmals des ersten und/oder zweiten Sicherheitselements demonstrieren.

13. Verfahren nach einem der Ansprüche 10 bis 12,
**dadurch gekennzeichnet,**
**dass** ein Scan eines biometrischen Merkmals bevorzugt mittels des Handgeräts aufgenommen wird und mit dem auf dem Sicherheitsdokument, insbesondere in der ersten und/oder zweiten Information gespeicherten Merkmal verglichen wird, insbesondere dass der Scan in ein Template komprimiert und/oder reduziert wird.

## Claims

1. Security document (1) having a first security element (14), which comprises a visually recognisable and machine-readable first piece of information, and a second security element (15), which comprises a machine-readable second piece of information, which can be used to verify the first piece of information, wherein the second security element comprises an optically variable element (151) that comprises a diffractive structure, a zeroth order diffraction structure, a blazed grating, a macrostructure, in particular a lens structure or microprism structure, a mirror surface, a matt structure, in particular an anisotropic or isotropic matt structure, a volume hologram or a thin film structure with colour change effect, and the optically variable element is adjacent, preferably directly adjacent, to the second piece of information and/or a further piece of information, and at least regionally overlaps the first piece of information, or the optically variable element is adjacent, preferably directly adjacent, to the first piece of information, and at least regionally overlaps the second piece of information.

2. Security document according to claim 1,
**characterised in that**
the first piece of information comprises personalised data relating to an owner of the security document and/or comprises an object associated with the security document, and/or
the first security element comprises an in particular printed or laser-engraved inscription and/or a photograph and/or a machine-readable zone (MRZ) of an identification document and/or a memory device, in particular an RFID chip.

3. Security document according to one of the preceding claims,
**characterised in that**
the second security element is formed as a code, in particular as a one or two-dimensional barcode, preferably as a diffractive barcode, and/or
the second piece of information comprises a key or a part of a key for decoding the first piece of information, and/or
the second piece of information comprises a checksum for the first piece of information, and/or
the second piece of information comprises a redundant reproduction of at least one part of the first piece of information, and/or
the second piece of information comprises a password for database access and/or for access to an RFID chip.

4. Security document according to one of the preceding claims,
**characterised in that**
the first and/or the second security element comprises a reflection layer, in particular a whole-surface or partial metallic layer and/or a whole-surface or partial layer made of a highly refractive material (HRI, High Refractive Index), and/or
the first and/or the second security element comprises single or multi-layered printed structures, in particular comprising coloured, optically active and/or optically variable dyes and/or pigments.

5. Security document according to one of the preceding claims,
**characterised in that**
the first security element and/or the second security element each have at least two partial regions, wherein, preferably in a first partial region, the first or second piece of information is respectively contained and/or stored, and adjacent to the first partial region and/or surrounding the first partial region, a second partial region, preferably comprising an optically variable element, is provided, in particular
at least the second partial region of the first security element at least regionally overlaps the second security element, in particular the first partial region of the security element or at least the second partial region of the second security element at least regionally overlaps the first security element, in particular the first partial region of the security element.

6. Security document according to one of the preceding claims,
**characterised by**
at least one microcode, which preferably comprises a structural size of between 0.5 µm and 300 µm, in particular between 1 µm and 100 µm, in particular preferably between 1 µm and 50 µm.

7. Security document according to one of the preceding claims,
**characterised in that**
the security document is formed as an identification document, visa document, driving licence, vehicle licence or similar.

8. Method for authenticating a security document according to one of the preceding claims by means of a handheld device, having the following steps:
- reading out a visually recognisable and in particular machine-readable first piece of information from a first security element;
- reading out an in particular machine-readable second piece of information from a second security element;
- verifying the first piece of information by means of the second piece of information, wherein, to read out the first and/or second piece of information, an image sequence and/or a video of the security document is recorded, and wherein, before or when reading out the first and/or second piece of information, an instruction to record the image sequence or the video is displayed on a display of the handheld device, which comprises, in particular, specifications relating to a camera angle, a camera distance, or similar,
wherein the presence of an optically variable element or an optically variable security feature is verified by the document being captured from different angles and the desired optical change of the optically variable element or the security feature is verified.

9. Method according to claim 8,
**characterised in that**
reading out the first and/or second piece of information and/or verifying the first piece of information is carried out by means of a handheld device, in particular a smartphone, PDA, tablet or similar.

10. Method according to one of claims 8 to 9,
**characterised in that**,
to verify the first piece of information, a checksum of the first piece of information is formed and is compared to a target checksum comprised by the second piece of information, and/or
to verify the first piece of information, at least one encrypted part of the first piece of information is encrypted by means of a key comprised by the second piece of information, and/or
to verify the first piece of information, the first piece of information is compared to a redundant copy of the first piece of information comprised by the second piece of information.

11. Method according to one of claims 8 to 10,
**characterised in that**
a third piece of information is retrieved by means of the first and/or second piece of information from a database stored on the handheld device or on a different calculator to the handheld device, or a third piece of information is recorded or plotted by the handheld device, in particular
the third piece of information comprises a key or a part of a key for decoding the first piece of information or forms a key pair together with the second piece of information.

12. Method according to claim 11,
**characterised in that**
the third piece of information comprises a piece of information about a target state of a security feature of the first and/or second security element, in particular,
by means of the third piece of information, a single image and/or an image sequence and/or a video is displayed on a display of the handheld device, which demonstrate a target state of an in particular diffractive security feature of the first and/or second security element.

13. Method according to one of claims 10 to 12,
**characterised in that**
a scan of a biometric feature is preferably captured by means of the handheld device and is compared to the feature stored on the security document, in particular in the first and/or second piece of information, in particular
the scan is compressed and/or reduced into a template.

## Revendications

1. Document de sécurité (1) avec un premier élément de sécurité (14), qui comprend une première information visuellement reconnaissable et lisible par machine, et un second élément de sécurité (15), qui comprend une deuxième information lisible par machine, qui peut être utilisée pour vérifier la première information,
dans lequel le second élément de sécurité comprend un élément optiquement variable (151), qui comprend une structure diffractive, une structure de diffraction d'ordre zéro, un réseau blazé, une macrostructure, en particulier une structure de lentille ou structure de microprisme, une surface réfléchissante, une structure mate, en particulier une structure mate anisotrope ou isotrope, un hologramme volumique ou une structure à film mince avec effet de changement de couleur et
l'élément optiquement variable est adjacent à la deuxième information et/ou une autre information, de préférence directement adjacent, et recouvre la première information au moins par endroits, ou que
l'élément optiquement variable est adjacent à la première information, de préférence directement adjacent, et recouvre la deuxième information au moins par endroits.

2. Document de sécurité selon la revendication 1,
**caractérisé en ce**
**que** la première information comprend des données personnalisées concernant un titulaire du document de sécurité et/ou un objet associé au document de sécurité, et/ou que le premier élément de sécurité comprend une inscription en particulier imprimée ou gravée au laser et/ou une photographie et/ou une zone lisible par machine (Machine Readable Zone MRZ) d'un document d'identité et/ou un dispositif de stockage, en particulier une puce RFID.

3. Document de sécurité selon l'une quelconque des revendications précédentes,
**caractérisé en ce**
**que** le second élément de sécurité est réalisé en tant que code, en particulier en tant que code-barres unidimensionnel ou bidimensionnel, de préférence en tant que code-barres diffractif, et/ou
**que** la deuxième information comprend une clé ou une partie d'une clé pour décoder la première information, et/ou que la deuxième information comprend une somme de contrôle pour la première information, et/ou
**que** la deuxième information comprend une restitution redondante d'au moins une partie de la première information, et/ou
**que** la deuxième information comprend un mot de passe pour un accès à une base de données et/ou pour un accès à une puce RFID.

4. Document de sécurité selon l'une quelconque des revendications précédentes,
**caractérisé en ce**
**que** le premier et/ou le second élément de sécurité comprend une couche réfléchissante, en particulier une couche métallique pleine surface ou partielle et/ou une couche pleine surface ou partielle constituée d'un matériau hautement réfractif (HRI, High Refractive Index), et/ou que le premier et/ou le second élément de sécurité comprend des structures imprimées monocouche ou multicouche, en particulier comprenant des colorants et/ou pigments colorés, optiquement actifs et/ou optiquement variables.

5. Document de sécurité selon l'une quelconque des revendications précédentes,
**caractérisé en ce**
**que** le premier élément de sécurité et/ou le second élément de sécurité présentent respectivement au moins deux sous-zones, dans lequel de préférence la première ou deuxième information est respectivement contenue et/ou stockée dans une première sous-zone et qu'une seconde sous-zone, comprenant de préférence un élément optiquement variable, est prévue au voisinage de la première sous-zone et/ou de manière à entourer la première sous-zone, en particulier
**qu'**au moins la seconde sous-zone du premier élément de sécurité recouvre au moins par endroits le second élément de sécurité, en particulier la première sous-zone de l'élément de sécurité ou au moins la seconde sous-zone du second élément de sécurité recouvre au moins par endroits le premier élément de sécurité, en particulier la première sous-zone de l'élément de sécurité.

6. Document de sécurité selon l'une quelconque des revendications précédentes,
**caractérisé par**
au moins un microcode qui comprend de préférence une taille de structure comprise entre 0,5 µm et 300 µm, en particulier entre 1 µm et 100 µm, de manière particulièrement préférée entre 1 µm et 50 µm.

7. Document de sécurité selon l'une quelconque des revendications précédentes,
**caractérisé en ce**
**que** le document de sécurité est réalisé en tant que document d'identité, document de visa, permis de conduire, certificat d'immatriculation ou similaire.

8. Procédé d'authentification d'un document de sécurité selon l'une quelconque des revendications précédentes au moyen d'un appareil portable avec les étapes :
- de lecture d'une première information visuellement reconnaissable et en particulier lisible par machine composée d'un premier élément de sécurité ;
- de lecture d'une deuxième information en particulier lisible par machine composée d'un second élément de sécurité ;
- de vérification de la première information à l'aide de la deuxième information, dans lequel pour la lecture de la première et/ou deuxième information une séquence d'images et/ou une vidéo du document de sécurité est capturée et dans lequel avant ou lors de la lecture de la première et/ou deuxième information une instruction de capture de la séquence d'images ou de la vidéo est affichée sur un écran de l'appareil portable, qui comprend en particulier des prescriptions concernant un angle de prise, une distance de prise ou similaire,
dans lequel la présence d'un élément optiquement variable ou d'une caractéristique de sécurité optiquement variable est vérifiée en prenant le document sous différents angles et en vérifiant la modification optique souhaitée de l'élément optiquement variable ou de la caractéristique de sécurité.

9. Procédé selon la revendication 8,
**caractérisé en ce**
**que** la lecture de la première et/ou deuxième information et/ou la vérification de la première information est effectuée au moyen d'un appareil portable, en particulier d'un smartphone, d'un PDA, d'une tablette ou similaire.

10. Procédé selon l'une quelconque des revendications 8 à 9, **caractérisé en ce**
**que** pour vérifier la première information, une somme de contrôle de la première information est formée et comparée à une somme de contrôle théorique comprise par la deuxième information, et/ou
**que** pour vérifier la première information au moins une partie chiffrée de la première information est déchiffrée au moyen d'une clé comprise par la deuxième information, et/ou que pour vérifier la première information la première information est comparée à une copie redondante de la première information comprise par la deuxième information.

11. Procédé selon l'une quelconque des revendications 8 à 10,
**caractérisé en ce**
**que** sur la base de la première et/ou deuxième information une troisième information est extraite d'une base de données mise en mémoire sur l'appareil portable ou sur une machine de calcul différente de l'appareil portable ou qu'une troisième information est capturée ou enregistrée par l'appareil portable, en particulier
**que** la troisième information comprend une clé ou une partie d'une clé pour décoder la première information, ou forme avec la deuxième information une paire de clés.

12. Procédé selon la revendication 11,
**caractérisé en ce**
**que** la troisième information comprend une information sur un état théorique d'une caractéristique de sécurité du premier et/ou second élément de sécurité, en particulier
**qu'**à l'aide de la troisième information, une image unique et/ou une séquence d'images et/ou une vidéo sont affichées sur un écran de l'appareil portable, qui exposent un état théorique d'une caractéristique de sécurité particulièrement diffractive du premier et/ou second élément de sécurité.

13. Procédé selon l'une quelconque des revendications 10 à 12,
**caractérisé en ce**
**qu'**un balayage d'une caractéristique biométrique est de préférence établi au moyen de l'appareil portable et est comparé à la caractéristique stockée sur le document de sécurité, en particulier dans la première et/ou deuxième information, en particulier que le balayage est compressé et/ou réduit en un modèle.
